# EUROPÄISCHE PATENTSCHRIFT

(11) **EP 3 711 144 B1**
(45) Veröffentlichungstag und Bekanntmachung des Hinweises auf die Patenterteilung: **04.03.2026**
(21) Anmeldenummer: 18795988.7
(22) Anmeldetag: 26.10.2018
(51) Int. Cl.: H02K 3/50, H02K 11/33, H02K 3/24

(54) **ELEKTRISCHE BAUEINHEIT MIT EINER WICKLUNG SOWIE VERFAHREN ZUR HERSTELLUNG EINER SOLCHEN BAUEINHEIT**
ELECTRICAL SUBASSEMBLY WITH A WINDING AND METHOD FOR PRODUCING A SUBASSEMBLY OF THIS KIND
UNITÉ STRUCTURALE ÉLECTRIQUE DOTÉ D'UN ENROULEMENT AINSI QUE PROCÉDÉ DE FABRICATION D'UNE TELLE UNITÉ STRUCTURALE

(30) Priorität: 15.11.2017 DE 102017126880
(43) Veröffentlichungstag der Anmeldung: 23.09.2020
(73) Patentinhaber: Deutsches Zentrum für Luft- und Raumfahrt e.V., 51147 Köln (DE)
(72) Erfinder: LIEBETRAU, Florian, 98693 Ilmenau (DE); WEBER, Christian, 96515 Sonneberg (DE); WACHTER, Christian, 70374 Stuttgart (DE)
(74) Vertreter: Fleck, Julia Maria
(86) Internationale Anmeldenummer: PCT/EP2018/079461
(87) Internationale Veröffentlichungsnummer: WO 2019/096565

(56) Entgegenhaltungen:
- DE-A1- 102005 032 965
- DE-A1- 102013 114 688
- DE-A1- 19 510 988
- JP-A- 2002 329 938
- US-A1- 2009 207 568
- US-A1- 2015 145 358
- US-B1- 6 538 356
- BRUNNER D G ET AL: "Foliengießen, Sintern und Anwendungen von Aluminiumnitrid", SPRECHSAAL,, vol. 121, no. 3, 1 March 1988 (1988-03-01), pages 181 - 186, XP001263640

## Beschreibung

Die Erfindung bezieht sich auf eine elektrische Baueinheit mit einer Wicklung, insbesondere Maschinenbaueinheit wie Stator, mit in einen Aufnahmekörper eingebrachten Leiterabschnitten und an diese zum Herstellen der Wicklung endseitig anschließenden elektrisch leitenden Verbindungsstrukturen, die zumindest zum Teil durch eine in einer elektrisch isolierenden Trägerstruktur eingebrachte Leiterbahnstruktur ausgebildet sind, wobei die Trägerstruktur aus mehreren Trägerstrukturteilen aufgebaut ist, die plattenartig gestaltet und in Normalenrichtung zur Plattenebene zu einem Trägerstrukturpaket aufeinander geschichtet sind und mit miteinander zur Deckung gebrachten Durchgängen zur Aufnahme von endseitigen Anschlussabschnitten der Leiterabschnitte versehen sind, welche zum Herstellen von zu erzielenden Windungen der Wicklung mit betreffenden verbindenden Leiterelementen der Leiterbahnstruktur kontaktiert sind, sowie auf ein Verfahren zum Herstellen einer solchen Maschinenbaueinheit mit einer Wicklung.

Die US 6 538 356 B1 zeigt eine derartige elektrische Baueinheit mit Wicklung, nämlich eine elektrische Maschine mit Rotor und einem Stator, bei der als Windungen dienende, in axialer Richtung erstreckte leitende Blättchen über endseitige Scheiben mit eingebrachten Leiterabschnitten zu den Statorwicklungen verbunden werden. Die endseitigen Scheiben sind ringförmig aus isolierendem Material ausgebildet, beispielsweise aus einer Keramik mit einem Gehalt von 96 % Aluminium.

Eine weitere derartige elektrische Baueinheit mit einer Wicklung, nämlich ein Stator für einen elektrischen Motor, ist in der US 2015/0145358 A1 gezeigt.

In dem Artikel von Brunner D. G et al.: "Foliengießen, Sintern und Anwendungen von Aluminiumnitrid", SPRECHSAAL, Bd. 121, Nr. 3, 1. März 1988 (1988-03-01), Seiten 181 - 186, XP001263640 ist ein keramischer Substratwerkstoff aus Aluminiumnitrid beschrieben und klassischen oxidischen keramischen Substratwerkstoffen gegenübergestellt. Verschiedene Anwendungen z. B. im Bereich der Elektronik sind angegeben.

In der US 2009/207568 A1 ist eine geschichtete Leiterplattenanordnung mit Kühlkanälen gezeigt.

Die DE 10 2005 032 965 A1 zeigt Statorwicklungen mit stabförmigen Leitern und Komponenten einer elektrischen Leistungselektronik auf einer stirnseitigen kreisförmigen Leiterplatte in einem Motorgehäuse.

Eine weitere elektrische Baueinheit ausgebildet als Stator einer elektrischen Maschine, sowie ein Verfahren zu Ihrer Herstellung sind in der US 2014 / 0 319 960 A1 angegeben. Bei dieser bekannten elektrischen Baueinheit und dem Verfahren sind stirnseitig einer Statoreinheit, in die stabförmige Leiterabschnitte eingelegt sind, Basisplatteneinheiten aufgesetzt, die die Leiterabschnitte des Stators in vorgewählter Weise verbinden. Die rechte und die linke Basisplatteneinheit sind ihrerseits aus zwei gegeneinander und gegenüber dem Statorkörper mit ringförmigen Isolierelementen isolierten Basisplatten aufgebaut. Die Basisplatten bestehen aus einem isolierenden Trägerkörper mit darin in Nuten eingelegten metallischen Verbindungsbahnen, die ihrerseits zum Verbinden der Leiterabschnitte zu einer Spule über Verbindungsstifte miteinander verbunden sind. Die anschlussseitigen Enden der Leiterabschnitte des Stators sind in den Basisplatten durch zugeordnete Durchgangslöcher geführt. Durch diesen Aufbau ergeben sich relativ komplexe Verbindungsstrukturen auf den beiden Basisplatten mit den zwischengefügten ringförmigen Isolierelementen.

In der US 2014 / 0 014 390 A1 ist eine Baueinheit mit einem Stator für eine mehrphasige elektrische Maschine gezeigt, die mehrere in axialer Richtung aufeinandergestapelte ringförmige Busstränge aufweist. Zur Positionierung der Busstränge sind in einem gehäuseartigen Trägerkörper domartige Montagezapfen mit schulterförmigen Abstufungen vorgesehen. Die Kontaktierung an den ringförmigen Bussträngen erfolgt seitlich, wobei es um die Verbindung der verschiedenen Phasen geht.

Die WO 2015 / 092 192 A2 zeigt ebenfalls eine Statorbaueinheit, bei der die Wickelköpfe mit Ringleitern ausgestattet sind. Dabei sind Anschlüsse radial außen an den Ringleitern für Phasenanschlüsse positioniert.

Die WO 2014 / 129 288 A1 hat einen radial geschichteten Ringleiter in einem isolierenden Träger zum Inhalt. Eine weitere elektrische Baueinheit mit einer Wicklung und ein Verfahren zu ihrer Herstellung, und zwar in Form eines Stators einer elektrischen Maschine, ist in der WO 2015/158508 A1 angegeben. Bei dieser elektrischen Baueinheit ist, wie bei derartigen Statoren üblich, eine Wicklung mit mehreren Spulen und Windungen in Nuten eines Stator-Blechpakets elektrisch isoliert eingelegt. Die in den Nuten eines sie tragenden Aufnahmekörpers eingelegten Leiterabschnitte sind an ihren stirnseitigen Enden durch jeweils einen Wickelkopf zu den Spulen der Wicklung elektrisch verbunden. Zur Herstellung des Wickelkopfs sind verschiedene Vorgehensweisen angegeben, wobei jeweils zwei Leiterenden miteinander elektrisch verbunden werden, beispielsweise indem die Leiterenden miteinander direkt verdrillt, direkt verlötet oder mit einem Verbindungsleiter verlötet werden. Die Wicklung wird im Bereich des Wickelkopfs mit einem Isolationsmaterial vergossen. Derartige Wickelköpfe besitzen in der Regel eine relativ große Ausdehnung und beanspruchen einen relativ hohen Anteil des Bauraums der Baueinheit. Auch wird beim Betrieb relativ viel Leistung durch eine starke Erwärmung in diesem Bereich verbraucht.

Auf solche Nachteile ist auch in der DE 10 2012 206 442 A1 und der DE 10 2015 218 929 A1 hingewiesen, worin besondere Maßnahmen zur Wärmeabfuhr durch Einbettung der Wickelköpfe vorgeschlagen sind. Beispielsweise ist in der DE 10 2012 206 442 A1 zur Auskleidung mit isolierendem Auskleidungsmaterial ein Keramikmatrixmaterial vorgeschlagen, in welches z. B. Silber- oder Kupferpartikel eingelagert sind. In der DE 10 2015 218 929 A1 sind mehrere die Wickelköpfe einbettende ringförmige Elemente sowie eine Flüssigkeitskühlung in einer Tragestruktur des Statorgehäuses gezeigt. Die Wärmeleiteinrichtung ist beispielsweise mit einer Keramik aus Aluminiumnitrid ausgestaltet.

Die JP 2002 329938 A zeigt einen plattenförmigen Bauteilträger aus keramischem Material hoher Wärmeleitfähigkeit und einer Kühlkanalanordnung für Kühlmittel zur Wärmeabfuhr.

Der vorliegenden Erfindung liegt die Aufgabe zugrunde, eine elektrische Baueinheit, insbesondere Maschinenbaueinheit, wie Stator, der eingangs genannten Art bereitzustellen, die bei möglichst wenig Bauraum einen möglichst effizienten Betrieb ergibt, und ein Verfahren zur Herstellung einer solchen Baueinheit anzugeben.

Diese Aufgabe wird hinsichtlich des Aufbaus der Baueinheit mit den Merkmalen des Anspruchs 1 und hinsichtlich des Herstellungsverfahrens mit den Merkmalen des Anspruchs 5 gelöst.

Für die Ausbildung der elektrischen Baueinheit ist dabei vorgesehen, dass mindestens eine Verbindungsstruktur durch eine in einer elektrisch isolierenden Trägerstruktur eingebrachte Leiterbahnstruktur ausgebildet ist. Mit diesen Maßnahmen wird ein geringer Bauraum mit vorteilhaften Gestaltungsmöglichkeiten der Baueinheit, insbesondere Maschinenbaueinheit erreicht, wodurch sich auch Vorteile für einen effizienten Betrieb ergeben. Beispielsweise können die erfindungsgemäßen Maßnahmen sowohl bei Einbringung der Leiterabschnitte in axialer Richtung als auch in radialer Richtung in die Nuten des Aufnahmekörpers angewandt werden. Die Ausbildung der Verbindungsstruktur mittels der Trägerstruktur und der darin eingebrachten Leiterbahnstruktur ergibt einen kompakten Aufbau im Bereich der Wickelköpfe, da die Trägerstruktur dünn ausgeführt und die Ausdehnung des Wickelkopfs gering gehalten werden kann. Dadurch lässt sich auch eine hohe Leistungsdichte erhalten. Auch lässt sich durch die Anordnung ein hoher Kupferfüllfaktor und damit auch eine hohe Effizienz der damit aufgebauten Maschine erreichen.

Mit dem Herstellungsverfahren, bei dem vorgesehen ist, dass zum Ausbilden mindestens einer Verbindungsstruktur eine elektrisch isolierende Trägerstruktur mit einer eingebrachten Leiterbahnstruktur hergestellt und bereitgestellt wird, und dass die in den Aufnahmekörper eingebrachten Leiterabschnitte endseitig mit betreffenden Leiterelementen kontaktiert werden, werden mit einfachen Maßnahmen vielfältige Gestaltungsmöglichkeiten erhalten, wobei mittels der Trägerstruktur und der Leiterbahnstruktur sich die Leiterabschnitte in einfacher Weise zu Windungen und darüber zu Spulen der Wicklung verbinden lassen.

Bei vorliegendem erfindungsgemäßem Aufbau, der auch unterschiedliche Anpassungsmöglichkeiten an jeweilige Gegebenheiten ergibt, wird die Trägerstruktur aus mehreren Trägerstrukturteilen aufgebaut, die zu einem Trägerstrukturpaket zusammengefasst sind.

Dabei sind die Trägerstrukturteile plattenartig gestaltet und in Normalenrichtung zur Plattenebene zu dem Trägerstrukturpaket aufeinander geschichtet sind.

Weitere erfindungsgemäße Maßnahmen für den Aufbau bestehen darin, dass die Trägerstrukturteile mit miteinander zur Deckung gebrachten Durchgängen zur Aufnahme von endseitigen Anschlussabschnitten der Leiterabschnitte versehen sind und dass die Leiterabschnitte zum Herstellen von zu erzielenden Windungen der Wicklung mit betreffenden verbindenden Leiterelementen der Leiterbahnstruktur kontaktiert sind.

Für einen effizienten Betrieb bei kompakter Ausbildung trägt dabei die erfindungsgemäße Maßnahme bei, dass die Trägerstruktur aus einem Material mit hoher Wärmeleitfähigkeit hergestellt ist, wobei die Trägerstruktur ganz oder teilweise, zu mehr als 50 %, aus einem Material mit einer Wärmeleitfähigkeit im Bereich von 100 bis 400 W/(m•K) hergestellt ist.

Zu einer hohen Effizienz tragen auch die erfindungsgemäße Maßnahme bei, dass in mindestens ein Trägerstrukturteil eine Kühlkanalanordnung mit einer Anschlussanordnung für Kühlmittel eingearbeitet ist.

Erfindungsgemäß sind Leiterelemente durch in die Trägerstrukturteile integrierte metallische Einlagen gebildet.

Vorteilhafte Ausgestaltungen der Erfindung sind in den Ansprüchen 2 bis 4 angegeben.

Weitere Vorteile für den Aufbau und die Funktion ergeben sich dadurch, dass in mindestens ein Trägerstrukturteil mindestens eine Komponente einer Leistungselektronik für die Steuerung einer mit dem Maschinenbauteil aufgebauten elektrischen Maschine integriert ist.

Eine weitere vorteilhafte Maßnahme besteht darin, dass die Trägerstruktur aus einem Material mit einer Wärmeleitfähigkeit im Bereich von 150 bis 300 W/(m•k) hergestellt ist.

Eine für den Aufbau und die Funktion vorteilhafte Ausgestaltung besteht darin, dass die Trägerstruktur zumindest teilweise aus gut wärmeleitfähigem Keramikmaterial, beispielsweise Aluminiumnitrid-Material, hergestellt ist. Alternativ kann vorteilhaft auch ein Aluminiumoxid-Material oder auch ein anderes keramisches Material mit guter elektrischer Isolationsfähigkeit und gleichzeitig guter Wärmeleitfähigkeit verwendet werden.

Die Erfindung wird nachfolgend anhand von Ausführungsbeispielen unter Bezugnahme auf die Zeichnungen näher erläutert. Es zeigen:
- Fig. 1: eine elektrische Baueinheit, nämlich einen Stator, mit einem Mittelteil und seitlichen Wickelköpfen nach dem Stand der Technik, in perspektivischer Ansicht,
- Fig. 2: einen Trägerstrukturteil zum Aufbau einer Trägerstruktur im endseitigen Bereich einer Wicklung in einer axialen Draufsicht,
- Fig. 3: eine auseinandergezogene Anordnung mehrerer Trägerstrukturteile nach Fig. 2 mit eingeführten Leiterabschnitten in perspektivischer Ansicht,
- Fig. 4: ein aus mehreren Trägerstrukturteilen nach Fig. 3 geschichtetes Trägerstrukturpaket in perspektivischer Ansicht und
- Fig. 5: eine elektrische Maschinenbaueinheit in Form eines Stators mit auf beiden Stirnseiten angeordneten Trägerstrukturen zum Bilden einer Verbindungsstruktur von Wickelköpfen.

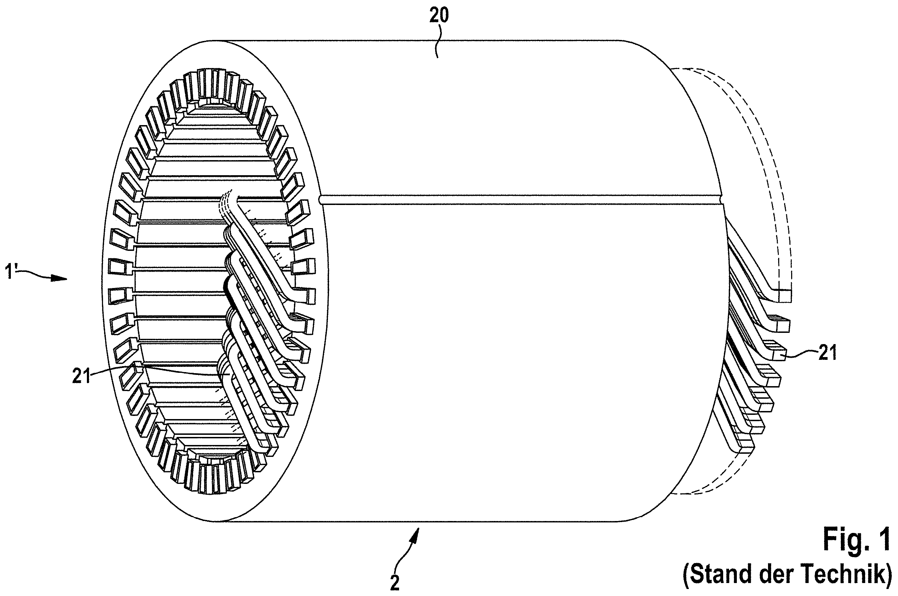

Fig. 1 zeigt beispielhaft eine elektrische Baueinheit 1' mit einer Wicklung, nämlich einen Stator einer elektrischen Maschine (Elektromotor, Generator), mit einem die Leiterabschnitte einer Wicklung aufnehmenden Aufnahmekörper 2 in dem mittleren Statorabschnitt 20 und zwei stirnseitig von diesem abstehenden Wickelköpfen 21, wobei die Leiterabschnitte in Aufnahmenuten am Innenumfang des Aufnahmekörpers 2 z. B. axial eingeführt oder radial eingelegt und über die Wickelköpfe 21 zu einer oder mehreren Spulen der Wicklung elektrisch leitend miteinander verbunden sind. Derartige Maschinenbaueinheiten 1' gehören zum Stand der Technik, wobei die seitlichen Wickelköpfe einen relativ großen Bauraum beanspruchen und außerdem einer relativ hohen Aufwärmung im Betrieb unterliegen, wie eingangs ausgeführt.

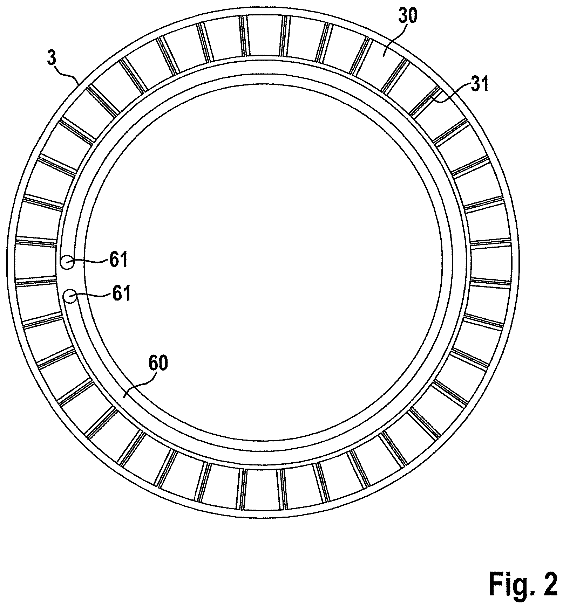

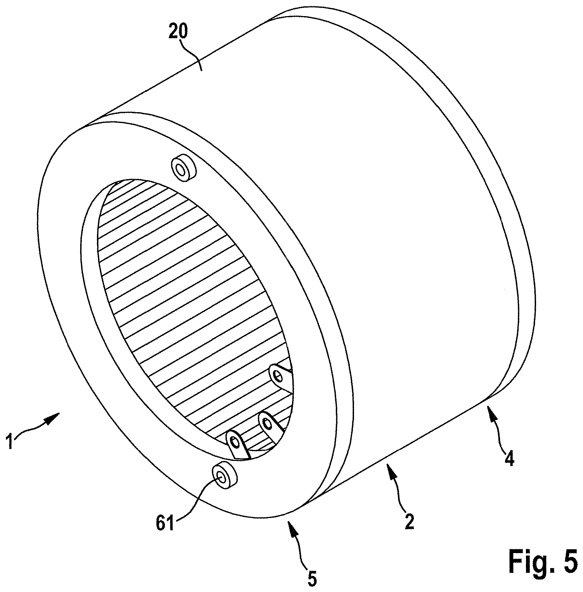

Um diese Probleme zu beheben, ist erfindungsgemäß, wie nachstehend anhand der Fig. 2 bis 5 beschrieben, eine Trägerstruktur 5 (vgl. Fig. 5) vorgesehen, die aus mehreren, insbesondere mehr als zwei, beispielsweise mehr als 4 oder 6, Trägerstrukturteilen 3 zusammengesetzt ist, wie die Fig. 2 bis 4 zeigen.

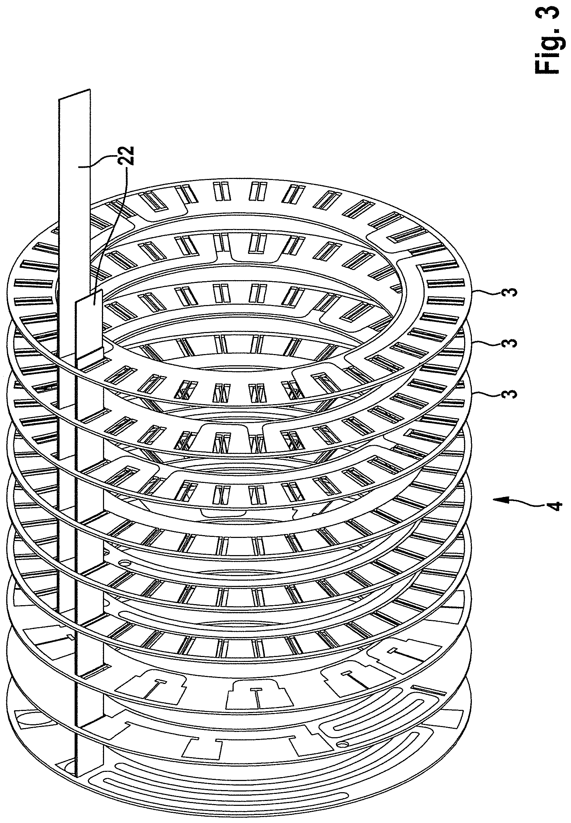

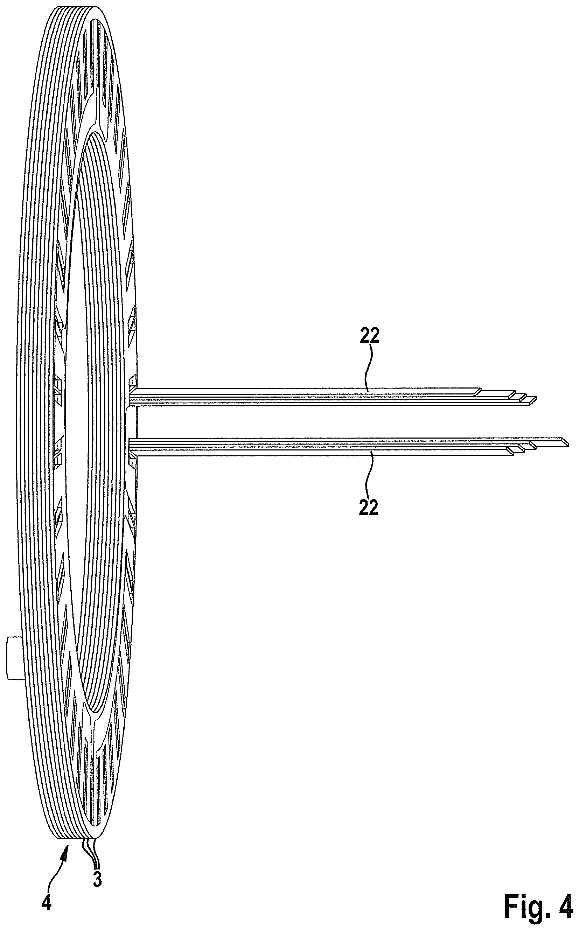

Fig. 2 zeigt ein Trägerstrukturteil 3 in axialer Draufsicht bezüglich einer (in dieser Fig. nicht gezeigten) Maschinenbaueinheit 1, wie einem Stator. Das Trägerstrukturteil 3 ist dabei plattenartig in Form einer Kreisscheibe ausgestaltet und weist eine Leiterbahnstruktur 30 sowie dazwischenliegende Durchgänge 31 zum Einführen von Endabschnitten der Leiterabschnitte 22 auf, wie aus den Fig. 3 und 4 ersichtlich. Beispielsweise sind die Durchgänge 31 für die Leiterabschnitte 22 entsprechend der Querschnittsform der Leiterabschnitte als sich in radialer Richtung längs erstreckende rechteckförmige Durchbrüche ausgebildet, zwischen denen die Leiterbahnstruktur 30 angeordnet ist. Die Leiterbahnstruktur 30 ist ihrerseits auf oder in einem elektrisch isolierenden Trägermaterial, vorzugsweise Keramikmaterial, wie z. B. aus Aluminiumnitrid mit einer hohen spezifischen Wärmeleitfähigkeit λ z. B. im Bereich von 180 bis 220 W/(m•K), ausgebildet. Auch andere Trägermaterialien, wie Aluminiumoxid-Material und allgemeiner Keramikmaterial mit guter elektrischer Isolationseigenschaft und möglichst hoher Wärmeleitfähigkeit können verwendet werden.

Die Leiterbahnstruktur 30 wird erfindungsgemäß dadurch ausgebildet, dass in dem jeweiligen Trägerstrukturteil 3 an vorgegebenen Stellen Aufnahmebereiche, als vertiefte Ausnehmungen eingebracht werden, in die als Leiterelemente metallische Einlagen vorzugsweise aus Kupfer eingesetzt bzw. integriert werden. Vorteilhaft werden hierzu die vorgegebenen Stellen bzw. die Ausnehmungen mit einem metallischen Belag beschichtet, der eine gut haftende und gut wärmeleitende Verbindung zwischen den Einlagen und dem Trägermaterial ergibt. Die Vertiefungen können, wie auch die Durchgänge 31, bereits im Grünling, also noch vor einem Sinterprozess, in dem Trägerstrukturteil 3 durch ein geeignetes Formgebungsverfahrn, wie z. B. spanabhebendes Bearbeiten (Schneiden, Fräsen und dgl.) eingearbeitet werden. Die Metallisierung bzw. das Einbringen des metallischen Belags bzw. der Einlage kann vorteilhaft nach dem Sintern erfolgen. In dieser Bearbeitungsphase können an einem oder mehreren Trägerstrukturteilen auch Schaltungskomponenten einer Elektronik integriert werden wie nachfolgend angegeben. Für eine einfache elektrische Isolierung bei gut leitendem Wärmeübergang ist z.B. eine einseitige Aufbringung der metallischen Einlagen auf die einzelnen Trägerstrukturteile 3 von Vorteil, jedoch lässt sich auch eine zweiseitige Aufbringung bei geeigneter gut wärmeleitender Isolierung realisieren.

Im Innern des Trägermaterials ist in das gezeigte Trägerstrukturteil 3, das z.B. dicker ausgeführt sein kann als die anderen Trägerstrukturteile 3, eine Kühlkanalanordnung 60 eingearbeitet, der über eine Anschlussanordnung 61 Kühlflüssigkeit zirkulierend zugeführt werden kann. Mit dem gut wärmeleitenden Trägermaterial und der gegebenenfalls zusätzlich vorhandenen Kühlkanalanordnung 60 mit durchströmender Kühlflüssigkeit lässt sich auch eine große anfallende Wärmemenge mit hohem Wirkungsgrad aus dem Bereich der Leiterbahnstruktur 30 und der Leiterabschnitte 22 abführen.

Wie aus den Fig. 3 und 4 ersichtlich, können die Endabschnitte der Leiterabschnitte 22 über die Leiterbahnstruktur 30, beispielsweise also über die integrierten Leiterelemente, vorteilhaft zu jeweiligen Windungen einer Spule und die Spulen vorteilhaft zu der in dem Maschinenbauteil angeordneten Wicklung elektrisch kontaktiert werden. Durch einen Durchgang 31 kann ein Leiterabschnittbündel mit mehreren gegeneinander isolierten Leiterabschnitten 22 geführt werden, wie aus Fig. 4 ersichtlich. Mit dem angegebenen Aufbau lassen sich unterschiedliche Verbindungen der Leiterabschnitte 22 je nach gewünschtem Aufbau herstellen.

Wie die Fig. 3 und 4 erkennen lassen, sind dabei in den einzelnen aufeinander geschichteten Trägerstrukturteilen 3 unterschiedliche Leiterbahnstrukturen 30 angeordnet, mit denen die Endabschnitte der Leiterabschnitte 22 elektrisch kontaktiert werden. Die Kontaktierung erfolgt dabei beispielsweise so, dass die Leiterbahnstruktur 30 an den betreffenden Stellen, beispielsweise also die betreffenden metallischen Einlagen, mit den zugeordneten Endabschnitten der Leiterabschnitte 22 verlötet werden, z.B. durch Weichlöten oder Hartlöten. Hierzu sind zumindest die Endabschnitte der Leiterabschnitte 22 mit einem genügend temperaturbeständigen Isolationsmaterial umgeben, wobei nur die zu kontaktierenden Enden frei liegen. Die zu kontaktierenden Stellen der Leiterbahnstruktur 30 bzw. der metallischen Einlagen können vorteilhaft mit einem geeigneten Flussmittel versehen sein, wie z. B. aus der SMD- bzw. SMT-Technik bekannt. Die Zuführung der für die Lötverbindung erforderlichen Wärmeenergie kann beispielsweise induktiv erfolgen.

Die Verbindung zweier Leiterabschnitte 22 zu einer Windung erfolgt über ein Leiterelement der Leiterbahnstruktur 30. Wie Fig. 3 auch zeigt kann beispielsweise mit einer auf einem Trägerstrukturteil 3 angeordneten Leiterbahnstruktur 30 eine Sternpunktverschaltung von Phasen erfolgen (s. zweites Trägerstrukturteil 3 von links).

Wie Fig. 5 zeigt, ist die Trägerstruktur 5, die aus dem Trägerstrukturpaket 4 mit den geschichteten Trägerstrukturteilen 3 gebildet ist, stirnseitig auf dem die Leiterabschnitte 22 tragenden Aufnahmekörper 2 aufgesetzt, wobei vorzugsweise auf jeder Stirnseite eine solche Trägerstruktur 5 angeordnet ist. Die Trägerstruktur 5 ergibt eine kompakte Bauweise, wobei durch den beschriebenen Aufbau mit den Kühlkanälen 60 entstehende Wärme wirkungsvoll abgeführt werden kann. Die Trägerstruktur 5 ergibt dabei vorteilhafte Anpassungsmöglichkeiten für den Aufbau der Baueinheit bzw. Maschinenbaueinheit und an den Aufnahmekörper 2 mit den Leiterabschnitten 22. Der Aufnahmekörper 2 kann dabei zusammen mit der Trägerstruktur 5 in einer gemeinsamen Ummantelung untergebracht sein. Auch kann die kompakt ausgebildete Trägerstruktur 5 mit dem Aufnahmekörper 2 beispielsweise durch Kleben oder mittels Klammern an dem Aufnahmekörper 2 angebracht sein.

Eine weitere vorteilhafte Ausgestaltungsvariante der in beschriebener und gezeigter Weise aufgebauten Trägerstruktur 5 besteht darin, dass, wie vorstehend angesprochen, zumindest ein Trägerstrukturteil 3 mit einer Komponente einer Leistungselektronik für die Steuerung einer mit dem Bauteil aufgebauten elektrischen Maschine versehen ist. Dadurch kann die Leistungselektronik bzw. können eine oder mehrere wärmeproduzierende Komponenten vorteilhaft ohne zusätzlichen Bauraum untergebracht und gleichzeitig mit der Kühleinrichtung in der Trägerstruktur 5 gekühlt werden. Die Komponenten der Leistungselektronik können vorteilhaft z. B. auf axial weiter außen liegenden Trägerstrukturteilen angeordnet werden. Neben der Verschaltung der Endabschnitte der Leiterabschnitte 22 erfüllt dabei die Trägerstruktur 5 weitere Versschaltungsfunktionen und ergibt vorteilhafte Ausbaumöglichkeiten, wobei eine erreichte dreidimensionale Strukturierung zusätzliche Vorteile für die kompakte Ausbildung bietet.

## Patentansprüche

1. Elektrische Baueinheit (1), insbesondere Stator, für eine elektrische Maschine, mit einer Wicklung, mit in einen Aufnahmekörper (2) eingebrachten Leiterabschnitten (22) und an diese zum Herstellen der Wicklung endseitig anschließenden elektrisch leitenden Verbindungsstrukturen, die zumindest zum Teil durch eine in einer elektrisch isolierenden Trägerstruktur (5) eingebrachte Leiterbahnstruktur (30) ausgebildet sind, wobei die Trägerstruktur (5) aus mehreren Trägerstrukturteilen (3) aufgebaut ist, die plattenartig gestaltet und in Normalenrichtung zur Plattenebene zu einem Trägerstrukturpaket (4) aufeinander geschichtet sind und mit miteinander zur Deckung gebrachten Durchgängen (31) zur Aufnahme von endseitigen Anschlussabschnitten der Leiterabschnitte (22) versehen sind, welche zum Herstellen von zu erzielenden Windungen der Wicklung mit betreffenden verbindenden Leiterelementen der Leiterbahnstruktur (30) kontaktiert sind, wobei die Leiterbahnstruktur (30) dadurch ausgebildet ist, dass in dem jeweiligen Trägerstrukturteil (3) an vorgegebenen Stellen als vertiefte Ausnehmungen Aufnahmebereiche eingebracht sind, in als Leiterelemente metallische Einlagen eingesetzt sind,
**dadurch gekennzeichnet,**
**dass** die Trägerstruktur (5) ganz oder teilweise, zu mehr als 50 %, aus einem Material mit hoher Wärmeleitfähigkeit im Bereich von 100 bis 400 W/(m•K) hergestellt ist, und
**dass** in mindestens ein Trägerstrukturteil (3) eine Kühlkanalanordnung (60) mit einer Anschlussanordnung (61) für Kühlmittel eingearbeitet ist, wobei die Kühlkanalanordnung (60) im Innern des Trägermaterials mindestens eines Trägerstruktururteils (3) angeordnet ist.

2. Baueinheit nach einem der vorhergehenden Ansprüche,
**dadurch gekennzeichnet,**
**dass** in mindestens ein Trägerstrukturteil (3) mindestens eine Komponente einer Leistungselektronik für die Steuerung einer mit der Maschinenbaueinheit aufgebauten elektrischen Maschine integriert ist.

3. Baueinheit nach einem der vorhergehenden Ansprüche,
**dadurch gekennzeichnet,**
**dass** die Trägerstruktur (5) ganz oder teilweise, zu mehr als 50 %, aus einem Material mit einer Wärmeleitfähigkeit im Bereich von 150 bis 300 W/(m•k) hergestellt ist.

4. Baueinheit nach einem der vorhergehenden Ansprüche,
**dadurch gekennzeichnet,**
**dass** die Trägerstruktur (5) zumindest teilweise aus gut wärmeleitfähigem Keramikmaterial, beispielsweise Aluminiumnitrid-Material, hergestellt ist.

5. Verfahren zum Herstellen einer elektrischen Baueinheit (1) für einen Elektromotor oder Generator, mit einer Wicklung, nach einem der vorhergehenden Ansprüche, bei dem in den Aufnahmekörper die Leiterabschnitte (22) eingebracht und die an diese zum Herstellen einer Wicklung endseitig elektrisch leitenden Verbindungsstrukturen angeschlossen werden, wobei zum Ausbilden mindestens einer der Verbindungsstrukturen die elektrisch isolierende Trägerstruktur (5) mit der eingebrachten Leiterbahnstruktur (30) hergestellt und bereitgestellt wird, und die in den Aufnahmekörper eingebrachten Leiterabschnitte (22) endseitig mit den betreffenden Leiterelementen kontaktiert werden, wobei die Leiterbahnstruktur (30) dadurch ausgebildet wird, dass in dem jeweiligen Trägerstrukturteil (3) an den vorgegebenen Stellen als vertiefte Ausnehmungen die Aufnahmebereiche eingebracht werden, in die als Leiterelemente metallische Einlagen eingesetzt werden,
**dadurch gekennzeichnet,**
**dass** die Trägerstruktur (5) ganz oder teilweise, zu mehr als 50 %, aus einem Material mit einer Wärmeleitfähigkeit im Bereich von 100 bis 400 W/(m•K) hergestellt wird,
**dass** in mindestens ein Trägerstrukturteil die Kühlkanalanordnung (60) mit der Anschlussanordnung für Kühlmittel eingearbeitet wird, wobei die Kühlkanalanordnung (60) im Innern des Trägermaterials mindestens eines Trägerstruktururteils (3) angeordnet ist.

## Claims

1. Electrical subassembly (1), in particular a stator, for an electric machine, comprising a winding, comprising conductor portions (22) introduced into a receiving body (2) and electrically conductive connecting structures that connect to said conductor portions at their ends to produce the winding, which structures are at least partially formed by a conductor track structure (30) introduced in an electrically insulating support structure (5), the support structure (5) being composed of a plurality of support structure parts (3) which are plate-like in design and are layered on top of each other in the normal direction to the plate plane to form a support structure package (4) and are provided with mutually aligned passages (31) for receiving connection portions of the conductor portions (22), the connection portions being located at the ends, which conductor portions are contacted by corresponding connecting conductor elements of the conductor track structure (30) to produce turns of the winding that are to be achieved, the conductor track structure (30) being formed by receiving regions being introduced as recessed depressions at predetermined locations in each support structure part (3), into which regions metal inserts are inserted as conductor elements,
**characterized**
**in that** the support structure (5) is produced entirely or partially, to an extent of more than 50%, from a material with high thermal conductivity in the range of 100 to 400 W/(m•K), and
**in that** a cooling channel arrangement (60) comprising a connection arrangement (61) for coolant is incorporated into at least one support structure part (3), the cooling channel arrangement (60) being arranged inside the support material of at least one support structure part (3).

2. Subassembly according to any of the preceding claims,
**characterized**
**in that** at least one component of a power electronics system for controlling an electric machine built with the machine subassembly is integrated into at least one support structure part (3).

3. Subassembly according to any of the preceding claims,
**characterized**
**in that** the support structure (5) is produced entirely or partially, to an extent of more than 50%, from a material with a thermal conductivity in the range of 150 to 300 W/(m•k).

4. Subassembly according to any of the preceding claims,
**characterized**
**in that** the support structure (5) is produced at least partially from highly thermally conductive ceramics material, for example aluminum nitride material.

5. Method for producing an electrical subassembly (1) for an electric motor or generator, comprising a winding, according to any of the preceding claims, in which method the conductor portions (22) are introduced into the receiving body and the electrically conductive connecting structures, to said conductor portions at their ends to produce a winding, are connected, the electrically insulating support structure (5) comprising the introduced conductor track structure (30) being produced and provided to form at least one of the connecting structures, and the conductor portions (22) introduced into the receiving body being contacted at their ends by the corresponding conductor elements, the conductor track structure (30) being formed by receiving regions being introduced as recessed depressions at the predetermined locations in each support structure part (3), into which regions metal inserts are inserted as conductor elements, **characterized**
**in that** the support structure (5) is produced entirely or partially, to an extent of more than 50%, from a material with a thermal conductivity in the range of 100 to 400 W/(m•K),
and
**in that** the cooling channel arrangement (60) comprising the connection arrangement for coolant is incorporated into at least one support structure part, the cooling channel arrangement (60) being arranged inside the support material of at least one support structure part (3).

## Revendications

1. Unité de construction électrique (1), en particulier stator, pour une machine électrique, comportant un enroulement, comportant des sections de conducteur (22) introduites dans un corps de réception (2) et des structures de connexion électriquement conductrices se raccordant à celles-ci côté extrémité pour la fabrication de l'enroulement, qui sont réalisées au moins en partie par une structure de pistes conductrices (30) introduite dans une structure de support (5) électriquement isolante, dans laquelle la structure de support (5) est constituée de plusieurs parties de structure de support (3), qui sont conçues à la manière de plaques et sont empilées les unes sur les autres dans un sens normal au plan de plaque pour former un paquet de structures de support (4) et qui sont pourvues de passages (31) alignés les uns avec les autres pour la réception de sections de raccordement côté extrémité des sections de conducteur (22), qui, pour la fabrication de spires à obtenir de l'enroulement, sont en contact avec des éléments conducteurs de connexion concernés de la structure de pistes conductrices (30), dans laquelle la structure de pistes conductrices (30) est réalisée en ce que des zones de réception, dans lesquelles des inserts métalliques sont insérés en tant qu'éléments conducteurs, sont ménagées en tant qu'évidements en creux à des endroits prédéfinis dans la partie de structure de support (3) respective,
**caractérisée en ce que**
la structure de support (5) est fabriquée entièrement ou partiellement, à plus de 50 %, en un matériau à conductivité thermique élevée dans la plage de 100 à 400 W/(m•K), et
qu'un agencement de canal de refroidissement (60) comportant un agencement de raccordement (61) pour un agent de refroidissement est incorporé dans au moins une partie de structure de support (3), dans laquelle l'agencement de canal de refroidissement (60) est disposé à l'intérieur du matériau de support d'au moins une partie de structure de support (3).

2. Unité de construction selon l'une des revendications précédentes,
**caractérisée en ce**
**qu'**au moins un composant d'une électronique de puissance pour la commande d'une machine électrique montée avec l'unité de construction de machine est intégré dans au moins une partie de structure de support (3).

3. Unité de construction selon l'une des revendications précédentes,
**caractérisée en ce que**
la structure de support (5) est fabriquée entièrement ou partiellement, à plus de 50 %, en un matériau comportant une conductivité thermique dans la plage de 150 à 300 W/(m•k).

4. Unité de construction selon l'une des revendications précédentes,
**caractérisée en ce que**
la structure de support (5) est fabriquée au moins partiellement en matériau céramique bon conducteur thermique, par exemple en matériau à base de nitrure d'aluminium.

5. Procédé pour la fabrication d'une unité de construction électrique (1) pour un moteur électrique ou un générateur, comportant un enroulement, selon l'une des revendications précédentes, dans lequel les sections de conducteur (22) sont introduites dans le corps de réception et lesquelles sont raccordées à ces structures de connexion électriquement conductrices côté extrémité pour la fabrication d'un enroulement, dans lequel la structure de support (5) électriquement isolante comportant la structure de pistes conductrices (30) introduite est fabriquée et mise à disposition pour la réalisation d'au moins l'une des structures de connexion, et les sections de conducteur (22) introduites dans le corps de réception sont mises en contact, côté extrémité, avec les éléments conducteurs concernés, dans lequel la structure de pistes conductrices (30) est réalisée en ce que les zones de réception, dans lesquelles des inserts métalliques sont insérés en tant qu'éléments conducteurs, sont introduites dans la partie de structure de support (3) respective aux endroits prédéfinis sous forme d'évidements en creux,
**caractérisé en ce que**
la structure de support (5) est fabriquée entièrement ou partiellement, à plus de 50 %, en un matériau comportant une conductivité thermique dans la plage de 100 à 400 W/(m•k), et
que l'agencement de canal de refroidissement (60) comportant l'agencement de raccordement pour l'agent de refroidissement est incorporé dans au moins une partie de structure de support, dans lequel l'agencement de canal de refroidissement (60) est disposé à l'intérieur du matériau de support d'au moins une partie de structure de support (3).
